# EUROPEAN PATENT APPLICATION

(11) **EP 4 696 992 A1**
(43) Date of publication of application: **18.02.2026**
(21) Application number: 24194619.3
(22) Date of filing: 14.08.2024
(51) Int. Cl.: G01G 7/04, G01L 1/08, G01L 1/14

(54) **FORCE MEASURING DEVICE WITH CURRENT CONTROL CIRCUIT**

(71) Applicant: Mettler-Toledo GmbH, 8606 Greifensee (CH)
(72) Inventor: REBER, Daniel, 8322 Madetswil (CH); WYSS, Stefan, 8124 Maur (CH); WIDMER, Simon, 8706 Meilen (CH)
(74) Representative: Leinweber & Zimmermann

(57) **Abstract**

The present invention refers to a force measuring device, based on the principle of electromagnetic force-compensation, comprising an electronic circuit driven by direct current including an inductor, in particular a coil, a control unit controlling the current flowing through the inductor and thereby also the compensation force, the controlling being responsive to the force to be measured, and means for providing a measurement output indicative of the force to be measured.

According to the invention controlling the current involves dynamic switching between two switch states associated with the two conduction directions of the inductor.

## Description

The present invention relates to a force measuring device, in particular a balance, which operates based on the principle of electromagnetic force compensation (also referred to as electromagnetic force restoration) and has an electronic circuit for controlling the current. In particular, it refers to a force measuring device, based on the principle of electromagnetic force-compensation, comprising an electronic circuit driven by direct current including an inductor, in particular a coil, a control unit controlling the current flowing through the inductor and thereby also the compensation force, the controlling being responsive to the force to be measured, and means for providing a measurement output indicative of the force to be measured.

A variety of force measuring devices, including for example a range of electronic balances, operate by generating and adjusting a magnetic compensation force, typically via induction.

In many cases, this force acts repulsively on a fixed magnet resulting in a motion of components in the device, which ultimately leads to an adjustment of the generated compensation force until an equilibrium position is reached, wherefrom the force to be measured (weight in case of a balance) can be inferred. Thereby, the reaching of the equilibrium by magnetic compensation can be so rapid (quasi-instantaneous) that there is effectively no significant physical motion of the parts, just a tendency to move is recognizable right away by a positioning sensor and, typically by feedback control, a maximum deflection from equilibrium position is very low. Typical examples of such balances with rapid feedback control are weighing cells, as known by the person skilled in the art.

The adjustment can take place continuously or discretely through a number of control cycles, depending on the technology. In a multitude of balances, the induction force is controlled by varying the current intensity (magnitude) through an induction device. Such systems are disclosed f.i. in DE 33 24 402 A1 and US 4 212 361 A. Temperature variations due to the changing current are present in these systems and are controlled by a corrective network in order to obtain an accurate measurement.

To improve accuracy, it is also known to provide a suitable reference unit giving a precise reference involving a more complex arrangement with several coils as disclosed in EP 1 898 193 B1.

The object of the present invention is to provide a force measuring device with a satisfactory accuracy combined with a satisfactory simple arrangement.

The object is achieved by providing a force measuring device according to claim 1. Advantageous embodiments of the invention are specified further in the dependent claims.

The present invention thereby provides a force measuring device with a current control circuit as initially introduced, which is essentially characterized in that controlling the current involves dynamic switching between two switch states associated with the two conduction directions of the inductor, preferably operating even at a fixed current.

Only a single inductor, preferably a coil, is required and both conduction directions of said coil are used during a switching cycle, which is a, preferably predetermined, length of time of duration T_{C}, although variable cycle time intervals are generally also implementable.

According to the present invention, the conduction directions are associated to two switch states, which, when respectively switched on, trigger the flow of current in the respective direction, while only one of the switch states is active at a point in time.

Switching between the two states is triggered dynamically. In a preferred embodiment, one of the states - state 1 - is on at the beginning of the cycle and the other state - state 2 - is switched on, with state 1 being simultaneously disabled, at a point in time T_{S} during the cycle and remains on until the end of the cycle. The time of switching for each cycle is determined in a manner responsive to the force to be measured.

The compensation force is adjusted via a control unit by varying the time T₁ the system is in state 1 and the time T₂ in state 2 during a cycle. In a preferred embodiment, this is achieved by varying the switching time T_{S} as a percentage of the cycle duration T_{C}=T₁+T₂.

The force measuring device can be in a zero-state corresponding to the situation where no weight is placed on the weighing system, respectively there is no actual force to be measured, while the system as such is, by its physical parts, already in an equilibrium position in the zero state. An implementation of such zero state can be given by a switching time T_{S,0}. Then, using f.i. T_{S,0}/T_{C} as control parameter of a feedback control, the zero state has said control parameter value T_{S}/T_{c}. Now, typically by a sensor sensing a deflection from equilibrium caused by a force to be measured/a weight put on the balance, T_{S}, respectively the control parameter q_{T} defined as Ts/Tc is increased, f.i. within a feedback loop involving the sensor and the control unit controlling q_{T}.

In consequence of the dynamic change in the cycle, respectively the increase of T_{S}, respectively q_{T}, the coil results in magnetic field variation and thereby an effective counterforce depending on the changed ratio of the switching states, indicatable in terms of q_{T}. Seen in an average, there is an increase in the magnetic field and, therefore, an increase in the magnetic force towards equilibrium.

Accordingly, when implemented for a weighing system (f.i. a balance), the invention provides a weighing system having a measuring mechanism on the basis of electromagnetic force compensation and comprising a magnet, a coil connected to an electric circuit driven by direct current, and a control (unit) controlling the electric circuit responsive to an information about the relative position of coil and magnet, which is essentially characterized in that the control has a control mode in which the electric circuit is alternatingly switched between a first phase in which the electric circuit is in a first switch state in which the current flows through the coil in one direction and a second phase in which the electric circuit is in a second switch state in which the current flows through the coil in the opposite direction, and in which a level of asymmetry between the first phase and the second phase is set responsive to said relative positioning information, said level of asymmetry containing, in particular consisting of, the duration of the first and the second phase.

Accordingly, the ratio T1/Tc or q_{T} are suitable to describe the level of asymmetry. As already mentioned before, a suitable parameter to express said asymmetry, f.i. q_{T} can be used as control parameter for a feedback control of the control unit, and the measurement result shall then depend on the feedback outcome at equilibrium. In particular, the measurement result may depend on, in particular be proportional to q_{T}-q_{T,0} with q_{T,0} being T_{S,0}/T_{C}.

In case of a force to be measured being continuous overtime, it is understood that any feedback loop time is lower than a relevant time scale of change of the force to be measured. Then, one has timely local equilibrium conditions as a basis for the measurement output signal.

In a preferred embodiment of the present invention, this force is adjusted until it compensates the force to be measured at which point the forces are in equilibrium and there is no motion of components in the device.

This is in particular the case for stationary weighing. Of course, the invention is not limited to stationary weighing regarding weighing processes, but is also applicable for weighing systems where items to be weighed are transported and measurement is taken during transport, such as in so-called check-weighers.

In case of a balance/weighing system, this adjustment is obtained involving a position sensor, which detects a displacement from a default position, which also corresponds to the force equilibrium, such as for example the position of an end region of the last lever in a lever arrangement of a load/weighing cell (f.i. a monobloc cell or a cell with parts from die cast aluminum and rolled bending bearings).

As already said above, there is an equilibrium position in the zero-state, an equilibrium position of the respective measuring process to be controlled into said equilibrium position of the zero-state. However, the equilibrium state may be reset if need is. In particular, the invention encompasses also those systems having a reference weight, the force transmission path of the reference weight ending up in the same electromagnetic force compensation arrangement, such as a coil/amendment arrangement at the end of the last lever of a lever system of a load/weighing cell.

The sensor then translates this mechanical deviation into an output, which is fed into the control unit, for adjusting the compensation force, preferably via a feedback loop. The details of the electromagnetic force compensation are generally known to the person skilled in the art and are not further described here.

According to the present invention, the device includes means for providing a measurement output indicative of the controlled current, from which the compensation force and thereby the force to be measured are inferred, in particular once local equilibrium or equilibrium is reached.

Preferably, the measurement output for a cycle depends on the ratio between the switched-on time of the switch T1 and the total cycle time Tc.

Even more preferably, due to the fixed/constant current supply, there is no need to have increased current magnitude as input determining the measurement result, while the magnitude of the current is still entering the measuring result by influencing an average over the cycle time T_{C} resulting from the time difference of the first phase and the second phase (time the system is in the first state and in the second state).

In a preferred embodiment of the present invention, a bridge circuit, in particular an H-bridge circuit, is used to obtain the two switch states.

An H-bridge circuit consists of four switches, with an additional connection between two points in the circuit, such that the switches are divided into two pairs by this connection.

In a preferred embodiment, the inductor is located at the connection separating the switches, also referred to as the middle of the H-bridge.

In a preferred embodiment of the present invention, a capacitor is connected in parallel to the inductor to smoothen the current changes while switching. A further advantage of the capacitator is also to prevent sound, in particular hearable sound, which would otherwise be present during the operation of the device. The capacitor also limits the voltages at both ends of the inductor.

In a preferred embodiment, the device operates at constant current, in particular using a fixed current source/sink, preferably including a circuit with a cascode MOSFET suppressing undesired voltage peaks negatively affecting the provision of fixed current. The provision of fixed current suppresses temperature variations due to current changes through a shunt resistor of the current source, and allows less consideration of counteracting measures as in prior art systems.

In a preferred embodiment of the present invention, the switches are configured as MOSFETs, in particular n- and p-channel MOSFETs in enhancement mode.

That preferred embodiment can further include a switching support circuit for preventing the MOSFETs to switch into a conducting state, when the voltage on the inductor ends exceeds the applied voltage. In particular, said switching support circuit can be configured by two pairs each of MOSFETs and resistors.

In another embodiment of the present invention, the switches can be configured as analog/integrated switches.

In a preferred embodiment, the frequency correlated with the cycle time T_{C} is of the order of magnitude of kHz. In particular, it is preferred that 1/T_{C} is at least 0.5 kHz, more preferably at least 1 kHz, more preferably at least 2 kHz, even at least 3 kHz. On the other hand side, it is preferred that the frequency does not exceed 20 kHz, in particular not exceed 16 kHz, further preferred not exceed 12 kHz, in particular not exceed 9 kHz.

The magnitude of the direct current is in the range of mA, in particular, this is the preferred magnitude for applications, in particular for implementing weighing cells with a resolution of at least five hundred thousand points per scaling magnitude interval, in particular of one million points or above, preferably of two million points or above for a scaling magnitude interval, for an example of a 1 kg interval, one million points means a resolution of 1mg. Preferably, the current intensity is at least 0.5 mA or more, preferably 2 mA or more, in particular 4 mA or more. Further, it is preferred that said current intensity does not exceed 30 mA, in particular not exceed 24 mA, in particular not exceed 16 mA. Regarding the switches in the circuit implementing the execution of the dynamical/alternating switching, it is preferred that the switching time to perform a switch on the first to the second switch state is lower than the cycle time T_{C} by at least a factor of 4, more preferably by at least a factor of 10, preferably at least a factor of 40, in particular by a factor of 100 or even by a factor of 200. Even higher ratios are envisaged, however, there is a natural limit by the physics of the implemented switches.

A particularly preferred embodiment comprises the above-mentioned capacitor in parallel to the coil and in particular the selection of an above ratio of switching times and cycle time. The invention provides, thus, a force measuring device, in particular a balance/weighing system allowing to have constant current magnitude level at even low levels via an implementation of only one coil, which additionally gives advantages regarding energy-efficiency with respect to any technologies using two or more coils in an implementation of an electromagnetic force compensation.

Notwithstanding the focus on weighing systems in the above parts of the description, the usage and advantages of the present invention are not limited to this particular application and could be used to measure different forces in different settings as well. There could be additional states integrated in the cycle time, such as a rest period state; it is important that the two switching states are present.

The invention will hereinafter be explained in more detail with references to the drawings, wherein:
Fig. 1 shows a circuit diagram illustrating a basic H-bridge circuit (1H) around an inductor (1L).
Fig. 2 shows a circuit diagram for controlling the current through the inductor (2L) according to a preferred embodiment of the present invention.
Fig. 3 illustrates several switching cycles schematically.
Fig. 4 shows a simplified explanatory diagram of a weighing system with the induction unit (I), which includes the current control circuit.

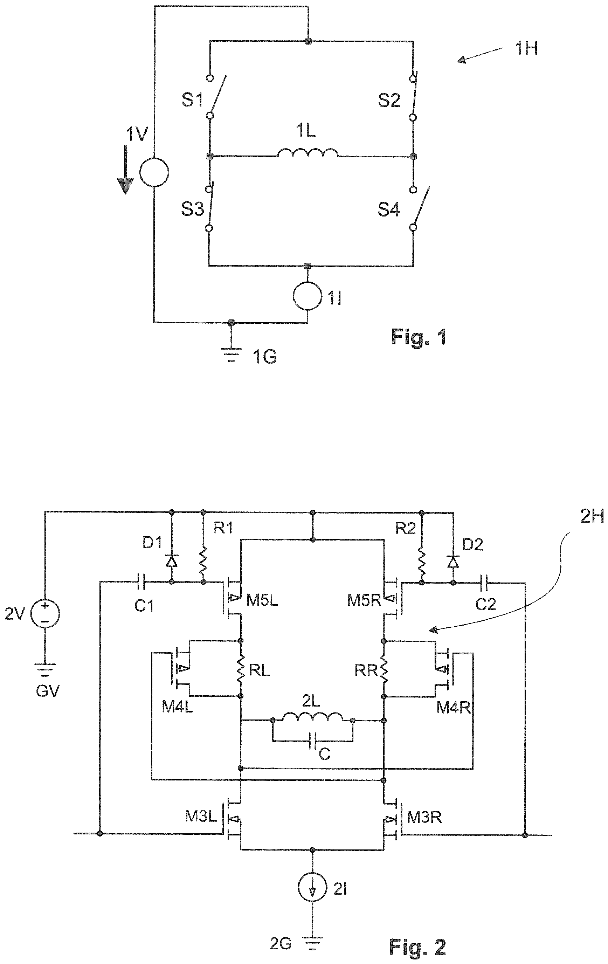

As illustrated in Fig.1, a H-bridge circuit (1H) is formed by four switches (S1-S4). Furthermore, there is a fixed voltage source (1V) connected to the H-bridge circuit (1H) between the upper switches (S1, S2) and a fixed current source/sink (1I) connected to the H-bridge circuit (1H) between the lower switches (S3, S4). Finally, the voltage source (1V) and the current source (1I) are both connected to the ground (1G).

The two switch states, introduced previously, correspond to each pair of diagonal switches in the H-bridge circuit (1H), so one of the upper switches (S1, S2) and the lower switch on the opposite side (S4, S3), being closed simultaneously with the other pair being open. In the figure one of the two switch states is depicted as the upper right switch (S2) and the lower left switch (S3) are closed and the upper left switch (S1) and the lower right switch (S4) are open.

Accordingly, by varying the time of activation of the respective diagonal switching configuration, the system effectively sees an averaged situation over the cycle time and, thus, an average current as effective quasi-stationary magnetic field in the electromagnetic force compensation.

As illustrated in Fig. 2, the H-bridge circuit (2H) around the inductor (2L) is formed by four MOSFET-switches (M5L, M5R, M3L, M3R). In an exemplary embodiment, the upper switches (M5L, M5R) are enhanced p-channel MOSFETs, while the lower switches (M3L, M3R) are enhanced n-channel MOSFETs. A fixed current source/sink (2I) is connected to the H-bridge circuit (2H) between the lower switches (M3L, M3R) and to the ground (2G) on the other side. A capacitor (C) is wired in parallel to the inductor (2L). Preferred values for the capacitance thereof are at least 0.2 µF, preferably larger than 0.5 µF, more preferably larger or equal to 0.8 µF and/or lower than 6 µF, preferably lower than 4 µF, more preferably lower than 2 µF.

A switching support circuit is formed by pairs each of MOSFETs and resistors (M4L, M4R, RL, RR) wired in parallel to each other, with the respective resistors of each pair being wired in series between each of the upper switches (M5L, M5R) and the inductor (2L), and the respective MOSFETs of each pair being connected to the wire of the opposite side of the H-bridge circuit (2H) between the inductor (2L) and the lower switch on that side (M3R, M3L).

Furthermore, the circuit includes a voltage source (2V) connected to a second ground (GV) on one side and having multiple connections to the H-bridge circuit (2H) on the other side. One connection is joined to the H-bridge circuit (2H) in between the upper switches (M5L, M5R). There are four further connections; two between the upper left switch (M5L) and the lower left switch (M3L) and two between upper right switch (M5R) and the lower right switch (M5R). Each of these connections include one electronic element between the voltage source (2V) and the H-bridge circuit (2H).

For the first connection between the left switches (M5L, M3L), which is closer to the lower switch (M3L) than the second connection between the left switches (M5L, M3L), the element is a diode (D1) with the cathode on the side of the voltage source (2V). For the second connection between the left switches the element is a resistor (R1). For the first connection between the right switches (M5R, M3R), which is closer to the lower switch (M3R) than the second connection between the right switches (M5R, M3R), the element is a diode (D2) with the cathode on the side of the voltage source (2V). For the second connection between the right switches the element is a resistor (R2). Finally, the are two further capacitors (C1, C2) each in between the lower switch on each side (M3L, M3R) and the respective first connection to the voltage source (2V) on that side.

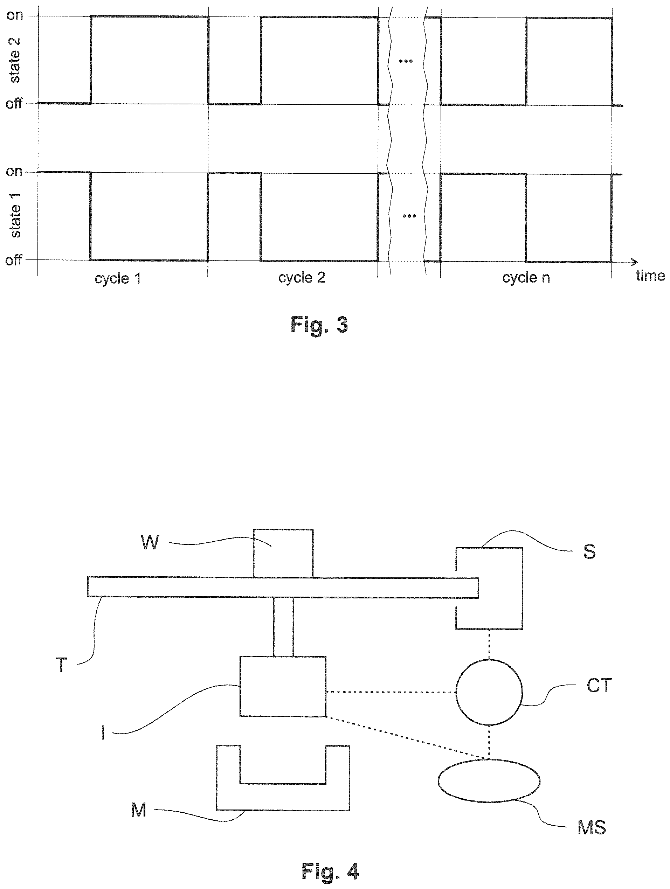

In Fig. 3, the horizontal axis depicts time with cycles indicated by tick marks and the vertical axes shows, for each switching state, whether it is switched on or off at that time. During each cycle the first state is switched on first for some time, with the second state being switched off, after which the second state is switched on, with the first state being switched off, for the remaining time in the cycle.

In the first two cycles the first state is switched on for 30% of the respective cycle. Horizontal dots indicate that several cycles in between the first two cycles and the final illustrated cycle - cycle n - are not displayed in the figure. In cycle n the first state is switched on for 50% of the cycle.

These simplified examples could, for instance, be the setting of the above-mentioned zero-state (no weighing) and the final setting after feedback control during measurement.

In Fig. 4 a simplified sketch of a possible weighing system is shown. The weight (W) is placed on the weighing tray (T), which is monitored by the sensor (S). Information about the position of the tray is fed to the control unit (CT), which is controls the induction unit (I) based on this information. The induction unit includes the current control circuit and generates the compensation force. This force interacts with the magnet (M) and thus adjusts the position of the weighing tray (T). This control is preferably done within a feedback loop. The measurement output at measurement means (MS) is obtained from the control unit (CT) and/or the induction unit (I).

So far described here, the current supply is direct current supply controlled to provide a current of constant magnitude. Even in such configurations with constant magnitude, the level of magnitude could be altered in different modes of operation of the system/device. Thereby, the weighing range can be altered, and in one embodiment the system has at least two modes of operation in which the current magnitude differs from one mode to the other.

In the following, a preferred embodiment of the present invention operating in a weighing system is described in more detail.

Schematically such systems can be described based on the simplified diagram shown in Fig. 4 and include a weighing tray (T), upon which the mass to be weighed is placed, coupled (involving, f.i., the Roberval-mechanism, and in particular a lever-system coupled thereto) to a position sensor (S), which detects displacements from the default position corresponding to a default switching time T_{S,0}. The displacement information is then passed to the control unit (CT), which in turn adjust the switching time T_{S} for the next switching cycle or couple of switching cycles.

In this embodiment, the switching time is adjusted by feedback control, until the compensation force and the weight are in equilibrium and the tray is returned to the default position.

Measuring means are then used to output information about the switch states within a cycle, as illustrated in Fig. 3, wherefrom the compensation force and through it the weight can be inferred.

As a technical implementation of this conceptually simple design in practice, a preferred embodiment depicted in Fig. 2 MOSFET-switches (M3L, M3R, M5L, M5R) are used preferable with switch transition time, which can be lower than 60 ns, preferably lower than 45 ns, and most preferably lower than 25 ns, with the lower limit being set by available technology. Otherwise, if operated with integrated/analog switches, the switch transition time can be lower than 5 ns and even lower than 2 ns or 1 ns.

In a preferred embodiment as depicted in Fig. 2, the device operates at a constant current preferably around 10 mA, an applied voltage around 6 V, and a cycle time of roughly 6 kHz. Generally, the applied voltage when operating with MOSFETs is sufficient to operate the elements in the circuit. Preferably, it can be below 200 V, below 50 V, even below 20 V, or below 10 V and/or is preferably above 4 V. For integrated/analog switches it could be below 4 V, could be below 2 V, and even below 0.5 V; preferably, one stays above 0.5 V.

The present invention can be embodied in other specific forms, for example operating with more than two switch states, apparent to those skilled in the art without departing from the essential characteristics thereof. The presently disclosed embodiments are therefore considered in all respects to be illustrative and not restricting. The present invention is limited by the scope of the appending claims, and not by details in the description and the presentation of the embodiments.

## Claims

1. Force measuring device, based on the principle of electromagnetic force-compensation, comprising
an electronic circuit driven by direct current including an inductor (1L, 2L), in particular a coil,
a control unit controlling the current flowing through the inductor and thereby also the compensation force, the controlling being responsive to the force to be measured, and
means for providing a measurement output indicative of the force to be measured, **characterized in that**,
controlling the current involves dynamic switching between two switch states associated with the two conduction directions of the inductor (1L, 2L).

2. The device according to claim 1, wherein said circuit is a bridge circuit.

3. The device according to claim 2, wherein said bridge circuit is an H-bridge circuit (1H) with four switches (S1-S4).

4. The device according to claim 3, wherein the pairs of switches of said H-bridge circuit (1H) being diagonal (S1 and S4, S2 and S3), are coupled, such that the two switch states correspond to one of the coupled pairs being closed and the other pair being open, respectively.

5. The device according to any one of the preceding claims, wherein a capacitor (C) is wired in parallel to the inductor (2L) to smoothen the current changes while switching.

6. The device according to any one of the preceding claims, wherein said device is driven by a fixed current, in particular using a fixed current source/sink (11).

7. The device according to any one of the preceding claims, wherein said switches (M3L, M3R, M5L, M5R) are configured as MOSFETs.

8. The device according to claims 2 and 7, with an additional switching support circuit, which prevents one or more of the MOSFET-switches (M3L, M3R, M5L, M5R) to be in a conducting state due to the voltage on the inductor ends exceeding the applied voltage (2V), in particular at the time of switching.

9. The device according to claims 3 and 8, wherein said switching support circuit is configured by two pairs each of MOSFETs and resistors (M4L, M4R, RL, RR) wired in parallel to each other, with the respective resistors of each pair being wired in series between each of the upper switches (M5L, M5R) and the inductor (2L), and the respective MOSFETs of each pair being connected to the wire of the opposite side of the H-bridge circuit (2H) between the inductor (2L) and the lower switch (M3R, M3L) on that side.

10. The device according to any one of claims 1 to 6, wherein said switches (S1-S4) are analog/integrated switches.

11. The device according to any one of the preceding claims, wherein the measurement output for a cycle depends on the ratio between the times for which each switch state is switched on during that cycle.

12. The device according to any one of the preceding claims, wherein the measurement output for a cycle depends on the ratio between the switched-on time of the switch and the total cycle time.

13. A weighing system having a force measuring device according to any one of the preceding claims.
